(19) Europäisches Patentamt
European Patent Office
Office européen des brevets

(11) EP 3 524 650 A1

(12) EUROPEAN PATENT APPLICATION
published in accordance with Art. 153(4) EPC

(43) Date of publication:
**14.08.2019 Bulletin 2019/33**

(21) Application number: **17858204.5**

(22) Date of filing: **20.09.2017**

(51) Int Cl.:
***C09D 183/04*** (2006.01) ***B32B 15/08*** (2006.01)
***C09D 183/02*** (2006.01)

(86) International application number:
**PCT/JP2017/033983**

(87) International publication number:
**WO 2018/066365 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2016 JP 2016196866**

(71) Applicant: **Threebond Co., Ltd.**
**Tokyo 192-0398 (JP)**

(72) Inventors:
- **KISHI Katsuhiko**
  **Hachioji-shi**
  **Tokyo 192-0398 (JP)**
- **KIRINO Manabu**
  **Hachioji-shi**
  **Tokyo 192-0398 (JP)**

(74) Representative: **Schwalek, Valérie**
**SCB S.A.S**
**235 avenue de la Recherche - Entrée B**
**59120 Loos (FR)**

# (54) COATING MATERIAL COMPOSITION

(57) Desired are thin coating layers for imparting excellent water repellency, excellent water slipperiness, and satisfactory coating-film durability especially to metallic, coating, or resinous surfaces of automotive bodies or train vehicles. The present invention was able to solve the problem by using a coating material composition having a specific makeup. The coating material composition of the present invention comprises 1 part by mass of silica particles (a), 0.01-1.8 parts by mass of a reactive silicone oligomer (b), 0.05-10 parts by mass of a given silicate compound (c), and 30-300 parts by mass of an organic solvent (e) and further contains an organic acid compound (d) in an amount of 0.001-0.5 parts by mass per part by mass of the sum of components (b) and (c).

EP 3 524 650 A1

## Description

### Technical Field

The present invention relates to a coating composition and more specifically relates to a coating composition which can provide a thin-film coating layer imparting water repellency, water-slippability and film durability to a metal surface, a painted surface, a resin surface or the like of an automobile body and a train carriage.

### Background Art

Solid, semi-solid or liquid coating compositions have conventionally been applied and laid on a painted steel plate of an automobile body and the like for the purpose of protection and aesthetic improvement. As such a coating composition, a composition obtained by adding a volatile organopolysiloxane oil and a volatile dimethylpolysiloxane to a moisture-curable organopolysiloxane, an organic solvent and a curing catalyst (Patent Document 1); a composition to which a high-viscosity silicone gum is added (Patent Document 2); and the like are known, for example. However, these compositions were difficult to exhibit water repellency and water-slippability for a long time, because the non-reactive organopolysiloxane oil volatilized and dissipated over time.

In order to solve the above-mentioned problem, various compositions consisting of a moisture-curable silicone oligomer, an organic solvent, a curing catalyst, and a silicone oil having a reactive functional group in the molecule have been proposed. Patent Document 3 discloses a use of a reactive silicone oil having a reactive group selected from a carbinol group, a carboxyl group, an amino group, a hydroxyl group (a silanol group) and the like at both terminals of the molecular chain, and Patent Document 4 and Patent Document 5 disclose a use of a reactive silicone oil having an alkoxysilyl group at one terminal of the molecular chain. Furthermore, Patent Document 6 proposes a use of a reactive silicone oil having a carbinol group or an amino group at the side chain of the molecule, and Patent Document 7 proposes a composition comprising a fluorine-containing alkoxysilane. Furthermore, Patent Document 8 discloses that dispersibility of silica particles in a composition is improved by applying ultrasonication in advance to the silica particles in the organic solvents or the like, and therefore excellent water repellency, transparency are expressed during film formation.

### Prior Art Documents

### Patent Documents

Patent Document 1: Japanese Patent Application Laid-Open No. H10-36771
Patent Document 2: Japanese Patent Application Laid-Open No. 2013-194058
Patent Document 3: Japanese Patent Application Laid-Open No. 2008-75021
Patent Document 4: Japanese Patent Application Laid-Open No. 2006-45507
Patent Document 5: Japanese Patent Application Laid-Open No. 2007-161989
Patent Document 6: Japanese Patent Application Laid-Open No. 2010-31074
Patent Document 7: WO 1996/000758, pamphlet
Patent Document 8: Japanese Patent Application Laid-Open No. 2003-147340

### Summary of Invention

### Problem to be solved

However, the above-mentioned prior art composition had problems that water-slippability (water slip property) as a measure for rain water repellency was insufficient, and both the water repellency and water-slippability could not be achieved, or sufficient film durability could not be secured.

### Solution to Problem

Thus, it was difficult to satisfy the required properties using the conventional thin-film coating composition. As a result of intensive studies to improve these properties in the present invention, it was found that the properties could be achieved by using a coating composition having the following constitution. That is, the first embodiment of the present invention is a coating composition containing:

(a) 1 part by mass of a silica particle;
(b) 0.01 to 1.8 parts by mass of a reactive silicone oligomer;
(c) 0.05 to 10 parts by mass of a silicate compound represented by the following chemical formula (2):
[Formula 1]

$$R^3{}_y\text{-Si}(OR^4)_{4-y} \qquad (2)$$

wherein each of $R^3$ and $R^4$ independently represents an aliphatic, alicyclic or aromatic hydrocarbon group having 1 to 8 carbon atoms, and y represents an integer of 0 to 3; and
(e) 30 to 300 parts by mass of an organic solvent,

and containing (d) 0.001 to 0.5 parts by mass of an organic acid compound based on 1 part by mass of the total amount of the (b) and (c).

Also, the present invention includes the following embodiments. The second embodiment is a coating composition according to the first embodiment, wherein the (b) has a viscosity of 0.01 to 250 $mm^2s^{-1}$ at 25°C.

The third embodiment is the coating composition according to the first or second embodiment, wherein the (b) is a partially-hydrolyzed condensate of a compound represented by the following chemical formula (1):
[Formula 2]

$$R^1{}_x\text{-Si}(OR^2)_{4-x} \qquad (1)$$

wherein each of $R^1$ and $R^2$ independently represents an aliphatic, alicyclic or aromatic hydrocarbon group having 1 to 8 carbon atoms, and x represents an integer of 0 to 3.

The fourth embodiment is the coating composition according to the third embodiment, wherein x represents 1, $R^1$ represents a methyl group, and $R^2$ is selected from a methyl group and a phenyl group in chemical formula (1) of the (b).

The fifth embodiment is the coating composition according to any one of the first to forth embodiments, wherein the (a) is a hydrophobic silica.

The sixth embodiment is the coating composition according to any one of the first to fifth embodiments, wherein the (a) is a silica particle ultrasonicated in advance in an organic solvent.

The seventh embodiment is the coating composition according to any one of the first to sixth embodiments, wherein y represents 0 or 1, and $R^4$ represents an ethyl group in chemical formula (2) of the (c).

The eighth embodiment is the coating composition according to any one of the first to seventh embodiments, wherein the (d) is selected from p-toluenesulfonic acid and oxalic acid.

The ninth embodiment is the coating composition according to any one of the first to eighth embodiments, wherein the average particle size of the (a) is 1 to 25 nm.

The tenth embodiment is the coating composition according to any one of the first to ninth embodiments, wherein the coating composition further contains any one or more compounds selected from a phosphoric acid compound, an organoaluminum compound, an organotitanium compound, an organozirconium compound, an organozinc compound, an organotin compound, an organocobalt compound and derivatives thereof, as a curing catalyst.

The eleventh embodiment is the coating composition according to any one of the first to tenth embodiments, wherein the coating composition is applied on an automobile exterior steel plate.

The twelfth embodiment is a method for manufacturing the coating composition according to any one of the first to eleventh embodiments, wherein the (a) is ultrasonicated in an alcohol-based solvent or a petroleum-based solvent for 10 minutes or longer, and then mixed with the (b), (c), (d) and (e).

The thirteenth embodiment is a coating layer-forming method, wherein the coating composition according to any one of the first to eleventh embodiments is applied on a surface of a substrate, the solvent is volatilized and a reactive component is crosslinked on the substrate to form a cured film.

The fourteenth embodiment is a coating layer formed by the coating layer-forming method according to the thirteenth embodiment.

**Effects of Invention**

The coating composition according to the present invention can be suitably applied on a steel plate of an automobile exterior or the like, and furthermore can be used to form a thin-film coating layer excellent in water repellency, water-slippability and film durability on the steel plate of the automobile exterior or the like.

## Description of Embodiments

Hereinafter, the present invention will be described in detail. The (a) contained in the coating composition according to the present invention is a silica particle and is a component which expresses excellent water repellency and water-slippability when a film is formed with the coating composition according to the present invention. Herein, as the silica particle, either a dry silica particle or a wet silica particle may be used, or otherwise a mixture of plural kinds of silica particles having different average particle sizes may be used. In the present invention, a commercially available known silica particle can be used. As fumed silica products, AEROSIL™ series available from NIPPON AEROSIL CO., LTD., CAB-O-SIL™ series available from Cabot Corporation, and REOLOSIL™ series available from Tokuyama Corporation, and the like are known. In addition, as amorphous silica products, Nipsil™ series available from Tosoh Silica Corporation, SYLYSIA™ series and SYLOPHOBIC™ series available from FUJI SILYSIA CHEMICAL LTD., Carplex™ series and SIPERNAT™ series available from DSL. Japan Co., Ltd., and the like are known. A silica product can be appropriately selected from them depending on the intended purpose.

The silica particle is preferably a hydrophobic silica particle. The hydrophobic silica particle refers to a silica particle obtained by modifying a surface of a crude silica particle with a hydrophobizing agent. As the hydrophobizing agent, a fatty acid, a resin acid, a fatty acid ester, a fatty acid metal salt, an alkoxysilyl compound such as a silane coupling agent, a silazane compound, a silicone oil, and the like are known. The particularly preferable hydrophobizing agent is the alkoxysilyl compound or the silazane compound. As the alkoxysilyl compound, alkoxysilanes such as methyltrimethoxysilane, ethyltrimethoxysilane, propyltrimethoxysilane, butyltrimethoxysilane, octyltriethoxysilane, hexyltriethoxysilane, decyltriethoxysilane, phenyltriethoxysilane, methyltriethoxysilane, dimethyldiethoxysilane, diphenyldiethoxysilane, vinyltriethoxysilane, methacryloxypropyltrimethoxysilane, glycidoxypropyltrimethoxysilane, glycidoxypropylmethyldimethoxysilane, mercaptopropyltrimethoxysilane, chloropropyltrimethoxysilane, aminopropyltrimethoxysilane, (2-aminoethyl) aminopropyltrimethoxysilane, (2-aminoethyl) aminopropylmethyldimethoxysilane are known. In addition, as the silazane compound, hexamethyldisilazane and the like are known. A crude silica is stirred in any of these hydrophobizing agents or a diluent thereof under an appropriately selected condition to modify the surface of the crude silica. In the present invention, the average particle size of the (a) is not limited, but is preferably within a range of 0.1 to 100 nm, more preferably a range of 0.5 to 50 nm, even more preferably a range of 1 to 25 nm. A particle having an average particle size within the above range is used, so that both application property during film formation and smooth film formation can be achieved. The average particle size described herein refers to an average particle size of a primary particle measured by electron microscopy.

The commercial products of the silica particle which can be suitably used in the present invention is not particularly limited, and e.g. AEROSIL R972 (average particle size: 16 nm, hydrophobic fumed silica), AEROSIL RX200 (average particle size: 12 nm, hydrophobic fumed silica), AEROSIL RY200 (average particle size: 12 nm, hydrophobic fumed silica), AEROSIL RX300 (average particle size: 7 nm, hydrophobic fumed silica), AEROSIL R812 (average particle size: about 7 nm, hydrophobic fumed silica), AEROSIL R912 (average particle size: 7 nm, hydrophobic fumed silica) available from NIPPON AEROSIL CO., LTD., and the like can be appropriately selected. A plural kinds of them may be used in combination.

For the silica particle, a silica particle ultrasonicated in advance in an organic solvent is particularly preferable. The ultrasonication described herein refers to a process that an impact by a sound wave at a frequency of approximately 20 kHz or higher is applied to an object to provide microscopically reversible or irreversible changes to the surface state, internal structure, and the like of the object. In the present invention, for the purpose of maintaining a particle size, the particle is ultrasonicated in advance so as to avoid increase in the apparent particle size due to secondary agglomeration of the silica particle. Through ultrasonication, the coating composition according to the present invention allows formation of a homogeneous film, and as a result, excellent water repellency, water-slippability and film durability can be expressed.

Herein, the ultrasonication is preferably carried out in such a way that the silica particle is immersed in a dispersion medium. As the dispersion medium, an appropriate material can be appropriately selected, but from the viewpoint of miscibility with the (e) described later, the same dispersion medium as the (e) or a dispersion medium having a high affinity with the (e) is preferably used. For ultrasonication conditions, a treatment temperature is suitably within a range of normal temperature to 100°C, more preferably about 25 to 50°C, and a treatment time is preferably 10 minutes or longer, more preferably 60 to 600 minutes. In order to prevent reagglomeration, the ultrasonicated (a) is preferably stored in a dispersed state in the dispersion medium before use. In this case, the dispersion medium is incorporated into the organic solvent (e) described later and is calculated as a part of the organic solvent (e). That is, a total mass of the organic solvent (e) is a sum of both a mass of the dispersion medium and a mass of the organic solvent described later.

The (b) contained in the coating composition of the present invention is a reactive silicone oligomer, which is a component required for imparting a strength to a film and fixing the film as a cured film when the film is formed of the coating composition of the present invention. Herein, the reactive silicone oligomer refers to a silicone compound which is obtained by dealcoholization condensation (also referred to as partial hydrolysis condensation herein) of mono- to tetra-functional alkoxysilyl compounds through partial hydrolysis with a known catalyst such as an acid, a base or an

organotin compound, and an organotitanium compound, and which has hydrolyzable groups derived from the alkoxysilyl compounds at the molecular chain terminals and/or side chains and has a linear or three-dimensional network structure. The reactive silicone oligomer (b) has a viscosity of preferably 0.01 to 250 $mm^2s^{-1}$, more preferably 0.01 to 200 $mm^2s^{-1}$ at 25°C. When the viscosity is within the above range, the (b) can be made uniformly compatible with the (c) described in detail later to effectively achieve the water repellency and the water-slippability. Herein, the viscosity is measured in accordance with JIS-Z-8803.

The reactive silicone oligomer (b) is a partially-hydrolyzed condensate of the alkoxysilyl compound preferably represented by the following chemical formula (1). A condensation degree of the partially-hydrolyzed condensate is not particularly limited as long as its viscosity is within the above range, but the partially-hydrolyzed condensate is preferably a 5 to 200-mer, more preferably a 10 to 150-mer, even more preferably a 15 to 125-mer.

[Formula 3]

$$R^1_x\text{-}Si(OR^2)_{4-x} \qquad (1)$$

In this formula, each of $R^1$ and $R^2$ independently represents an aliphatic, alicyclic or aromatic hydrocarbon group having 1 to 8 carbon atoms. $R^1$ represents an aliphatic hydrocarbon group which is selected preferably from a methyl group, an ethyl group, a n-propyl group and an iso-propyl group, more preferably from a methyl group and an ethyl group, and particularly preferably $R^1$ represents a methyl group. $R^2$ is preferably selected from a methyl group, an ethyl group and a phenyl group, particularly preferably from a methyl group and a phenyl group. Additionally, x in the formula represents an integer of 0 to 3, preferably 0 or 1, particularly preferably 1. Here, the compound represented by chemical formula (1) may be a mixture having two or more x values. The component (b) can be prepared by: adding a known hydrolysis catalyst to the compound represented by chemical formula (1); and stirring the mixture while heating in the presence of moisture so as to cause the partial hydrolysis condensation of the compound. In chemical formula (1), when x represents 0 or 1 and the polymer of the compound has a linear structure, the polymer will have an alkoxy group represented by ($OR^2$) at the side chain, or when the polymer does not have a linear structure but constitutes a three-dimensional crosslinked body, the polymer partly contains an alkoxy group in the structure. Although x may be 2 or 3 for the compound represented by chemical formula (1), a compound in which x represents 0 or 1 is preferable for effectively incorporating an alkoxy group into the structure of the component (b). Here, a compound satisfying only x = 3 is not used. When a compound of x = 3 is present, compounds of x = 0 to 2 should also be used at the same time.

The (b) is a component that imparts mainly water repellency and water-slippability to the composition after curing. The compound is not particularly limited as long as it is obtained from chemical formula (1) in the same manner as described above, and any commercial product can be appropriately used. It can be exemplified by X-40-9225, X-40-9227, X-40-9246, X-40-9250, KR-500, KC-89S, KR-401N, KR-510, KR-9216, KR-213, X-22-4309 (trademark, available from Shin-Etsu Chemical Co., Ltd.), XC96-B0446, XR31-B1410, XR31-B2733, XR31-B2230, TSR165, XR31-B6667, XR31-B1763 (trademark, available from Momentive Performance Materials Japan LLC), SILRES MSE100, SILRES H44 (trademark, available from WACKER ASAHIKASEI SILICONE Co., Ltd.), and the like, and they may be used alone or in combination. In the present invention, for the (b), a commercial product containing a curing catalyst in advance may be used. As the commercial product, products containing a phosphoric acid-based compound as a catalyst, e.g. KR-400, KR-401, X-40-2327 (trademark, available from Shin-Etsu Chemical Co., Ltd.), and the like are known.

A content of the (b) in the coating composition according to the present invention is 0.01 to 1.8 parts by mass, preferably from 0.05 to 1.6 parts by mass, particularly preferably 0.1 to 1.4 parts by mass based on 1 part by mass of the (a). When the content of the (b) in the coating composition according to the present invention is within the above range, a film with a thickness within an appropriate range can be formed, so that good water repellency and water-slippability can be expressed, and furthermore good film durability can also be achieved.

The (c) contained in the coating composition according to the present invention is a silicate compound, and is a component required for reinforcing the film to impart the film durability when a film is formed of the coating composition according to the present invention. Here, the silicate compound refers to a compound represented by the following chemical formula (2).

[Formula 4]

$$R^3_y\text{-}Si(OR^4)_{4-y} \qquad (2)$$

In this formula, each of $R^3$ and $R^4$ independently represents an aliphatic, alicyclic or aromatic hydrocarbon group which has 1 to 8 carbon atoms and may have a substituent, and is preferably selected from a methyl group and an ethyl group. Here, the substituent is preferably selected from a group consisting of an amino group, a mercapto group, a glycidyl group, an acryloyl group, a methacryloyl group and a vinyl group. y represents an integer of 0 to 3, preferably an integer of 0 to 2, more preferably 0 or 1, particularly preferably 0. Here, the compound represented by chemical formula (2) may be a mixture having two or more y values. In the compound represented by chemical formula (2), more

preferably y represents 0 and $R^4$ represents an aliphatic hydrocarbon group, and particularly preferably y represents 0 and $R^4$ represents any one or more kinds selected from a methyl group, an ethyl group, a n-propyl group and an isopropyl group. The most preferable compound in the present invention is a compound in which y represents 0 and $R^4$ represents an ethyl group, i.e. ethyl silicate (tetraethoxysilane).

In the coating composition according to the present invention, the (c) is a component which is incorporated into a network by reacting with the (b) during film formation and reinforces the film by increasing a crosslink density. As the compound, any commercial product can be appropriately used as long as it is represented by the above formula. The compound is not particularly limited but can be exemplified by Ethyl Silicate 28 (tetraethoxysilane), n-propyl silicate (tetra-n-propoxysilane), n-butyl silicate (tetra-n-butoxysilane) (available from Colcoat Co., Ltd.), and the like, and they may be used alone or in combination.

A content of the (c) in the coating composition according to the present invention is 0.05 to 10 parts by mass, preferably 0.07 to 5 parts by mass, particularly preferably 0.1 to 2.5 parts by mass based on 1 part by mass of the (a). When a content of the (c) in the coating composition according to the present invention is not less than the lower limit value, a film strength can be maintained, and when the content is not more than the upper limit value, flexibility of the film can become moderate.

The (d) contained in the coating composition according to the present invention is an organic acid compound, which acts as a curing catalyst required for curing reaction necessary in forming the film of the coating composition according to the present invention. The compound has an action to hydrolyze a reactive group contained in the (b) and (c) i.e. a hydrolyzable group such as an alkoxyl group through reaction with moisture or the like in air to crosslink respective molecules through condensation reaction. As the compound having the above action, an organometallic compound, an organic acid compound, an inorganic acid compound, a basic compound, and the like are known. Particularly, in the present invention, excellent water repellency and water-slippability can be imparted to the film of the coating composition by selecting an organic acid compound.

The (d) may be contained in the composition together with each component of the (a) to (c) and (e) during production of the coating composition according to the present invention, or otherwise a material containing the (d) together with the (b) or (c) may be included in the composition. The (d) usable in the present invention is one or more organic acid compounds selected from a toluenesulfonic acid compound and an aliphatic carboxylic acid compound, preferably either p-toluenesulfonic acid or oxalic acid.

A content of the (d) in the coating composition according to the present invention is 0.001 to 0.5 parts by mass, preferably 0.005 to 0.25 parts by mass, particularly preferably 0.01 to 0.2 parts by mass based on 1 part by mass of the total amount of the (b) and (c). When the content is not more than the upper limit value, the coating composition according to the present invention can maintain storage stability, and when the content is not less than the lower limit value, the coating composition according to the present invention can maintain an appropriate curing property.

The (e) contained in the coating composition according to the present invention is an organic solvent and is a medium for uniformly mixing and dispersing each of the components (a) to (d) in the coating composition according to the present invention. For the organic solvent, any solvent can be appropriately selected depending on required characteristics as long as the solvent allows uniform mixing and dispersion of each component. However, when a solvent having a property of reacting with the (b) or (c) is used, the coating composition according to the present invention may have a problem in the storage stability, and thus such a solvent should be excluded. In addition, from the viewpoint of workability in forming the coating layer by applying the coating composition according to the present invention, a solvent having a higher degree of volatility, preferably a solvent having a boiling point of 180°C or lower is used. When using a mixture of two or more solvents, a solvent having an initial boiling point of 180°C or lower is preferable.

The (e) which can be preferably used in the present invention is not particularly limited, and can be appropriately selected from an alcohol-based compound, an ester-based compound, an ether-based compound, a ketone-based compound, a hydrocarbon-based compound such as a paraffinic compound and a naphthenic compound, and a halogenated hydrocarbon-based compound obtained by halogenating any of the aforementioned compounds, a petroleum-based solvent, and the like. Examples of the solvent include methanol, ethanol, 1-propanol, 2-propanol, 1-butanol, 2-butanol, tert-butanol, methyl acetate, ethyl acetate, propyl acetate, isopropyl acetate, butyl acetate, ethyl ether, THF, 1,4-dioxane acetone, methylethyl ketone, benzene, toluene, xylene, chlorobenzene, acetonitrile, n-hexane, n-heptane, cyclohexane, methylcyclohexane, dichloromethane, chloroform, trichlene, tetrachloroethane, gasoline, petroleum ether, naphthene-based petroleum distillation solvent, paraffin-based petroleum distillation solvent, isoparaffin-based petroleum distillation solvent, and the like, and they may be used alone or in combination. In the present invention, an alcohol-based compound, a ketone-based compound, and a saturated aliphatic hydrocarbon compound and a naphthene-based hydrocarbon compound which have two or more carbon atoms are preferable from the viewpoints of work environment related to odor and the like, safety, and volatility. One or more solvents selected from ethanol, 1-propanol, 2-propanol, 1-butanol, 2-butanol, isobutanol and tert-butanol are particularly preferable.

A content of the (e) in the coating composition according to the present invention is 30 to 300 parts by mass, preferably 45 to 250 parts by mass, and particularly preferably 50 to 200 parts by mass based on 1 part by mass of the

(a). When the content is not more than the upper limit value, the coating composition according to the present invention can maintain appropriate volatility and film formability, and when the content is not less than the lower limit value, the coating composition according to the present invention can secure appropriate workability.

The coating composition according to the present invention can appropriately contain any components unless the properties are deteriorated. For example, a non-reactive silicone oil, an alkoxysilane compound other then the (b) and the (c), a curing catalyst other than the (d), an adhesion imparting agent such as silane coupling agent, a plasticizer, an antioxidant, a corrosion inhibitor, a colorant, a surfactant, a rheology modifier, an ultraviolet absorber, an infrared absorber, a fluorescence agent, an abrasive, a perfume, a filler, and the like can be contained. In particular, as the curing catalyst other than the (d), an organometallic compound such as an organoaluminum compound, an organotitanium compound, an organozinc compound, an organotin compound, an organocobalt compound, an organozirconium compound and an organoiron compound or a derivative thereof, an inorganic acid such as hydrochloric acid and sulfuric acid, an inorganic base such as ammonia and sodium hydroxide, an organic base such as tributylamine, 1,5-diazabicyclo[4.3.0]nonene-5 (DBN), 1,8-diazabicyclo[5.4.0]undecene-7 (DBU), and the like, or a phosphoric acid compound can be contained. As the curing catalyst other than the (d), more preferably a phosphoric acid compound, and an organometallic compound selected from an organoaluminum compound, an organotitanium compound and an organozirconium compound, e.g. tetrabutyl titanate, tetranonyl titanate, tetrakis ethyleneglycolmethylether titanate, tetrakis ethyleneglycolethylether titanate, bis(acetylacetonyl)dipropyl titanate, acetylacetone aluminum, aluminum tris-ethylacetoacetate, and the like can be contained. Content of these curing catalysts other than the (d) are preferably 0.5 parts by mass or less, more preferably 0.1 parts by mass or less, even more preferably 0.05 parts by mass or less based on 1 part by mass of the (b) contained in the coating composition according to the present invention.

The coating composition according to the present invention can be applied to a substrate such as various metals, glass, ceramics and resin, preferably to a metal steel plate, a painted metal steel plate or a glass surface. Particularly when the coating composition is applied to an automobile exterior steel plate used for automobile exteriors, water repellency and water-slippability are provided to the automobile exterior steel plate, and stain components such as rain stain are less likely to adhere, and thus a glossy appearance can be maintained for a long period.

The means for applying the coating composition according to the present invention is not particularly limited, and any application means, e.g., manual application using a cloth impregnated with the composition, brush application, mechanical application using an automatic machine, and the like can be appropriately used. In the present invention, application in accordance with the following method is particularly preferable. That is, the method contains: impregnating a cloth such as a dry sponge or waste cloth with an appropriate amount of the coating composition according to the present invention; thinly spreading the coating composition onto the surface of the substrate by hand; and volatilizing volatile components by natural drying or forced drying using a dryer or the like. Subsequently, finishing is carried out by wiping up the coated surface with another dried cloth, a micro fiber waste cloth, or the like. At this time, the (b) and the (c) which are reactive components contained in the composition form a cured film on the substrate as the hydrolysis reaction advances by the action of the curing catalyst (e). Here, the coating layer formed of the coating composition according to the present invention is preferably a thin film, and preferably has a thickness of approximately 0.01 to 100 $\mu$m, preferably 0.1 to 50 $\mu$m. When the film thickness of the coating layer is within the above-mentioned range, good water repellency, water-slippability and film durability as well as workability during coating, and aesthetic appearance can be achieved.

A mechanism of the film formation having excellent properties resulting from the coating composition according to the present invention is predicted to be as follows. That is, it is predicted that when the (b) as the main curing component is crosslinked by hydrolysis, the (b) uniformly and stably reacts and crosslinks using the solid (a) as a core and, furthermore the (c) having a large number of reaction sites is incorporated into the network to increase the crosslinking density, and thereby a dense and firm cured film excellent in water repellency and water-slippability is formed.

Hereinafter, the present invention will be explained in detail with reference to Examples, but these Examples are not intended to limit the embodiments of the present invention.

## Examples

[Method for preparing composition]

The properties of the coating composition according to the present invention were evaluated in Examples and Comparative Examples described in Table 1. The coating compositions evaluated in Examples and Comparative Examples were prepared as follows based on composition ratios (mass ratios) shown in Table 1. In a liquid prepared by dispersing 1.0 mass% of silica (a) in a 2-propanol (e), the silica (a) was ultrasonicated in advance, which was used as the (a). To the silica dispersion, a predetermined amount of 2-propanol (e) was further added so that an amount of the (e) is a predetermined concentration shown in Table 1, and stirred at normal temperature. To this dispersion, the (b) and the (c) were sequentially added, continued to be stirred for 10 minutes, to which further the (d) and optionally other

components (D-25) were added and stirred for 5 minutes to prepare each coating composition. Here, the coating compositions prepared in Examples and Comparative Examples are abbreviated as "composition" in some cases.

[Method for preparing test piece]

Each composition shown in Table 1 was infiltrated into tissue paper in an amount for wetting a half of the tissue paper (about 2 ml), and thinly spread on a black painted plate (available from ASAHI-BETECHNO K.K., material: SPCC-SD, standard: JIS-G-3141, size: 0.8 mm×70 mm×150 mm, one surface was painted black with aminoalkyd after chemical conversion and electrodeposition) by hand, allowed to stand in a room at 25°C for 10 minutes, and then a remainder was wiped off with a dry micro fiber cloth. This was allowed to stand in a room at 25°C for 2 weeks for curing to obtain a test piece.

[Method for evaluating water repellency]

One drop (about 0.005 ml) of purified water was dropped to the surface of the test piece kept horizontally, and a contact angle with the water drop was measured using a contact angle meter (DM-500, available from Kyowa Interface Science Co., Ltd.) to evaluate the water repellency. A contact angle desirable for the water repellency is approximately 125° or larger.

[Method for evaluating water-slippability]

One drop (about 0.005 ml) of purified water was dropped to the same test piece, the test piece was gradually inclined from a horizontal state, and an angle at which the water droplet started to flow was observed as a water slipping-down angle to evaluate the water-slippability (water slip property). A water slipping-down angle desirable for the water-slippability is approximately 10° or smaller.

[Method for evaluating film durability]

The same test piece was sprayed with ion exchanged water from a distance of 10 cm by a sprayer 50 times, water droplets on the surface of the test piece were wiped off with a dry cloth, then the contact angle was measured under the same condition as for evaluating the water repellency, and a rate of change was determined according to the following formula, and recorded. A rate of change desirable for the film durability is a value of approximately 90% or higher.

[Equation 1]

**Rate of change = (contact angle [°] after 50 sprayings / initial contact angle [°]) × 100 (%)**

[Raw materials for Composition]

Raw materials contained in each composition prepared in Examples and Comparative Examples of the present invention are as follows. Each content by mass ratio is shown in Table 1. However, in Table 1, the mass of the 2-propanol used as the dispersion medium for the (a) is described in the column (e), and only the mass of the silica particle is described in the column (a).

(a) Silica particle

RX300: available from NIPPON AEROSIL CO., LTD., average primary particle size 7 nm, a fumed silica having a surface hydrophobized with hexamethyldisilazane, which is irradiated with ultrasonic wave at 20 kHz for 120 minutes in advance in a liquid prepared by dispersing 1.0 mass% of the fumed silica in the 2-propanol;

(b) Reactive silicone oligomer

X-40-2327: available from Shin-Etsu Chemical Co., Ltd., which is prepared by partial hydrolysis and condensation of a compound in which both $R^1$ and $R^2$ are methyl groups and x = 1 to 3 is satisfied in chemical formula (1), viscosity at 25°C: 0. 9 $mm^2s^{-1}$, 5 to 10% phosphoric acid-based catalyst-containing product;
KR-500: available from Shin-Etsu Chemical Co., Ltd., which is prepared by partial hydrolysis and condensation of a compound in which both $R^1$ and $R^2$ are methyl groups and x = 1 to 3 is satisfied in chemical formula (1), viscosity

at 25°C: 25 $mm^2s^{-1}$;

X-40-9250: available from Shin-Etsu Chemical Co., Ltd., which is prepared by partial hydrolysis and condensation of a compound in which both $R^1$ and $R^2$ are methyl groups and x = 1 to 3 is satisfied in chemical formula (1), viscosity at 25°C: 160 $mm^2s^{-1}$;

(b) A comparative substance for the reactive silicone oligomer

X-22-4039: available from Shin-Etsu Chemical Co., Ltd., a compound represented by the following chemical formula (3), viscosity at 25°C: 90 $mm^2s^{-1}$,

[Formula 5]

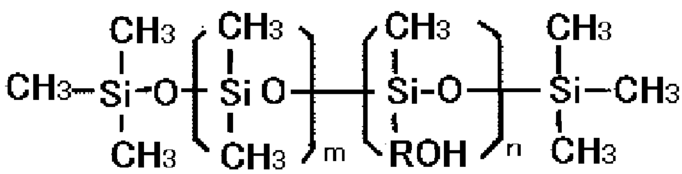

(3)

wherein ROH represents a carbinol group (alkylalcohol group);

(c) Silicate compound

Ethyl Silicate 28: available from Colcoat Co., Ltd., a compound in which $R^4$ is an ethyl group and y = 0 is satisfied in chemical formula (2), chemical name: tetraethoxysilane;

(c) A comparative substance for the silicate compound

Methyl Silicate 51: available from Colcoat Co., Ltd., a compound in which $R^4$ is a methyl group and y = 0 is satisfied in chemical formula (2), i.e. an average-tetrameric partially-hydrolyzed condensate obtained by hydrolysis and condensation of tetramethoxysilane;

(d) Organic acid compound and a comparative component

P-toluenesulfonic acid: available from Tokyo Chemical Industry Co.,Ltd., a reagent;
Oxalic acid: available from Wako Pure Chemical Industries, Ltd., a reagent;
Hydrochloric acid: available from Wako Pure Chemical Industries, Ltd., a reagent, 1% aqueous solution;

(e) Organic solvent

2-propanol: available from NACALAI TESQUE, INC. a reagent;
Others, a curing catalyst other than the (d)
D-25: available from Shin-Etsu Chemical Co., Ltd., an organotitanium-based catalyst

[Table 1]

Table 1

| | | Examples | | | | | | | Comparative Examples | | | | |
|---|---|---|---|---|---|---|---|---|---|---|---|---|---|
| | | 1 | 2 | 3 | 4 | 5 | 6 | 7 | 1 | 2 | 3 | 4 | 5 |
| (a) | RX300 | 1.0 | 1.0 | 1.0 | 10 | 1.0 | 1.0 | 1.0 | 1.0 | 1.0 | 1.0 | 1.0 | 1.0 |
| (b) | X-40-2327 | - | - | 1.0 | 1.0 | - | - | 1.0 | 1.0 | 2.0 | 1.0 | - | 1.0 |
| | KR-500 | 1.0 | - | - | - | 1.0 | - | - | - | - | - | - | - |
| | X-40-9250 | - | 1.0 | - | - | - | 1.0 | - | - | - | - | - | - |
| | X-22-4309 | - | - | - | - | - | - | - | - | - | - | 1.0 | - |
| (c) | Ethyl Silicate 28 | 0.5 | 0.5 | 0.5 | 0.8 | 0.5 | 0.5 | 0.5 | - | 0.5 | 0.5 | 0.5 | - |
| | Methyl Silicate 51 | - | - | - | - | - | - | - | - | - | - | - | 0.5 |
| (d) | p-Toluenesulfonic Acid | 0.01 | 0.01 | 0.01 | 0.01 | 0.01 | 0.01 | | 0.01 | 0.01 | - | 0.01 | 0.01 |
| | Oxalic Acid | - | - | - | - | - | - | 0.01 | - | - | - | - | - |
| | Hydrochloric Acid | - | - | - | - | - | - | - | - | - | 0.01 | - | - |
| (e) | 2-Propanol | 125 | 125 | 125 | 125 | 125 | 125 | 125 | 126 | 124 | 125 | 125 | 125 |
| Others | D-25 | - | - | - | - | 0.01 | 0.01 | - | - | - | - | - | - |
| Total | | 128 | 128 | 128 | 128 | 128 | 128 | 128 | 128 | 128 | 128 | 128 | 128 |
| **Evaluation Results of Properties** | Water Repellency[°] | 130 | 132 | 145 | 144 | 139 | 140 | 141 | 141 | 118 | 93 | (*) | 81 |
| | Water-Slippability [°] | 8 | 9 | 5 | 5 | 4 | 6 | 5 | 5 | 22 | 46 | (*) | 4 |
| | **Film** Durability[%] | 91 | 91 | 100 | 99 | 94 | 93 | 99 | 70 | 84 | 88 | (*) | 97 |
| (*) represents that the property was not evaluated because the composition was not cured. | | | | | | | | | | | | | |

The results in Table 1 showed that all of the compositions according to the present invention were good in both water repellency and water-slippability, and excellent in film durability. The coating compositions of Examples 1 and 2 consisted only of the components (a) to (e), and as the component (b), silicone oligomers having different viscosities were used. All of them were good in all of water repellency, water-slippability and film durability. For the coating composition of Example 3, as the component (b), a silicone oligomer having a viscosity lower than that of the components (b) used in Examples 1 and 2 and containing a phosphoric acid-based catalyst as an arbitrary component was used. In Example 3, water repellency, water-slippability and film durability were improved compared to Examples 1 and 2. The coating composition of Example 4 has an increased amount of the component (c) compared to Example 3 within the scope of the present invention. In Example 4, the water repellency, water-slippability and film durability were good and almost equivalent to those in Example 3. Each of the coating compositions of Examples 5 and 6 was prepared by further adding an organotitanium-based catalyst as an arbitrary component to the coating compositions of Examples 1 and 2 respectively. In Examples 5 and 6, water repellency, water-slippability and film durability were somewhat improved compared to Examples 1 and 2. The coating composition of Example 7 was prepared by replacing the component (d) p-toluenesulfonic acid in Example 3 with oxalic acid. In Example 7, good properties almost equivalent to those in Example 3 could be obtained.

On the other hand, in the composition of Comparative Example 1, the component (c) silicate compound in Example 3 was not contained. In Comparative Example 1, although the water repellency and water-slippability were good, the film durability was insufficient. In the composition of Comparative Example 2, the content of the reactive silicone oligomer (b) in Example 3 was increased exceeding the predetermined range according to the present invention. All of the water repellency, water-slippability and film durability were remarkably poor. This may be due to a phenomenon that the content of the component (b) having few reactive groups becomes excessive, thereby the unreacted component (b) remains on the substrate and reacts with dust and the like in the atmosphere to inhibit expression of each property, and the like. In the composition of Comparative Example 3, the component (d) p-toluenesulfonic acid in Example 3 was replaced with hydrochloric acid as an inorganic acid, and all properties were remarkably bad. In Comparative Example 3, supposedly the reason for the poor results of both the poor water repellency and water-slippability is that an excessively strong catalytic function of the inorganic acid not only hydrolyzes the curing component but also decomposes and hydrophilizes the surface of the silica particle, and thus the change in the state of the agglomerated silica deteriorates the above properties. In Comparative Example 4, a compound having a reactive functional group (carbinol group) on the molecular side chain was used as a comparative component for the component (b). In Comparative Example 4, a cured film was not formed on the substrate, and thus the properties could not be evaluated. In Comparative Example 5, a methyl silicate oligomer (average tetramer) was used as a comparative component for the component (c). In Comparative Example 5, the water-slippability and the film durability were good, but the water repellency remarkably deteriorated. The reason for this is supposedly that the methyl silicate having a methoxy group with a relatively high activity reacts with the reactive group of the (b), but the (b) does not crosslink among the molecules and forms a ring within the molecule, and thus a hard film is not formed.

## Industrial Applicability

The coating composition according to the present invention forms a thin-film coating layer having excellent water repellency and water-slippability and good film durability, particularly a thin-film coating layer imparting water repellency, water-slippability and film durability as well as gloss and antifouling property to a metal surface, a painted surface, a resin surface or the like of an automobile body and a train carriage, and thus the coating composition is useful for these applications.

## Claims

**1.** A coating composition containing:

(a) 1 part by mass of a silica particle;
(b) 0.01 to 1.8 parts by mass of a reactive silicone oligomer;
(c) 0.05 to 10 parts by mass of a silicate compound represented by a following chemical formula (2):
[Formula 1]

$$R^3{}_y\text{-Si}(OR^4)_{4-y} \qquad (2)$$

wherein each of $R^3$ and $R^4$ independently represents an aliphatic, alicyclic or aromatic hydrocarbon group having 1 to 8 carbon atoms, and y represents an integer of 0 to 3; and

(e) 30 to 300 parts by mass of an organic solvent,

and containing (d) 0.001 to 0.5 parts by mass of an organic acid compound based on 1 part by mass of the total amount of the (b) and (c).

**2.** The coating composition according to claim 1, wherein the (b) has a viscosity of 0.01 to 250 $mm^2s^{-1}$ at 25°C.

**3.** The coating composition according to claim 1 or 2, wherein the (b) is a partially-hydrolyzed condensate of a compound represented by a following chemical formula (1):
[Formula 2]

$$R^1_x\text{-}Si(OR^2)_{4-x} \qquad (1)$$

wherein each of $R^1$ and $R^2$ independently represents an aliphatic, alicyclic or aromatic hydrocarbon group having 1 to 8 carbon atoms, and x represents an integer of 0 to 3.

**4.** The coating composition according to any one of claims 1 to 3, wherein the (a) is a hydrophobic silica.

**5.** The coating composition according to any one of claims 1 to 4, wherein the (a) is a silica particle ultrasonicated in advance in an organic solvent.

**6.** The coating composition according to any one of claims 1 to 5, wherein y represents 0 or 1, and $R^4$ represents an ethyl group in the chemical formula (2) of the (c).

**7.** The coating composition according to any one of claims 1 to 6, wherein the (d) is selected from p-toluenesulfonic acid and oxalic acid.

**8.** The coating composition according to any one of claims 1 to 7, wherein the average particle size of the (a) is 1 to 25 nm.

**9.** The coating composition according to any one of claims 1 to 8, wherein the coating composition further contains any one or more compounds selected from a phosphoric acid compound, an organoaluminum compound, an organotitanium compound, an organozirconium compound, an organozinc compound, an organotin compound, an organocobalt compound and derivatives thereof, as a curing catalyst.

**10.** The coating composition according to any one of claims 1 to 9, wherein the coating composition is for an automobile exterior steel plate.

**11.** A method for manufacturing the coating composition according to any one of claims 1 to 10, wherein the (a) is ultrasonicated in an alcohol-based solvent or a petroleum-based solvent for 10 minutes or longer, and then mixed with the (b), (c), (d) and (e).

**12.** A coating layer-forming method, wherein the coating composition according to any one of claims 1 to 10 is applied on a surface of a substrate, and as the solvent is volatilized, a reactive component is crosslinked on the substrate to form a cured film.

**INTERNATIONAL SEARCH REPORT**

International application No.
PCT/JP2017/033983

A. CLASSIFICATION OF SUBJECT MATTER
*C09D183/04*(2006.01)i, *B32B15/08*(2006.01)i, *C09D7/12*(2006.01)i, *C09D183/02*(2006.01)i

According to International Patent Classification (IPC) or to both national classification and IPC

B. FIELDS SEARCHED

Minimum documentation searched (classification system followed by classification symbols)
C09D1/00-201/10, B32B1/00-43/00, C09K3/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2016-69645 A (Idemitsu Kosan Co., Ltd.), 09 May 2016 (09.05.2016), claims; paragraph [0035]; examples 1, 4 (Family: none) | 1-4,6-9,12<br>5,11<br>10 |
| Y | JP 2008-50380 A (SNT Co.), 06 March 2008 (06.03.2008), paragraph [0014] (Family: none) | 5,11 |
| A | JP 2002-128898 A (Fuji Kagaku Corp.), 09 May 2002 (09.05.2002), claims; examples (Family: none) | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October 2017 (06.10.17) | 17 October 2017 (17.10.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.
PCT/JP2017/033983

C (Continuation). DOCUMENTS CONSIDERED TO BE RELEVANT

| Category* | Citation of document, with indication, where appropriate, of the relevant passages | Relevant to claim No. |
|---|---|---|
| A | JP 1-170668 A (Daihachi Chemical Industry Co., Ltd.), 05 July 1989 (05.07.1989), claims; examples (Family: none) | 1-12 |
| A | JP 2008-81719 A (Kansai Paint Co., Ltd.), 10 April 2008 (10.04.2008), claims; examples (Family: none) | 1-12 |
| A | JP 2004-26873 A (Teijin Chemicals Ltd.), 29 January 2004 (29.01.2004), claims; examples (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1036771 B
- JP 2013194058 A
- JP 2008075021 A
- JP 2006045507 A
- JP 2007161989 A
- JP 2010031074 A
- WO 1996000758 A
- JP 2003147340 A